(19) Europäisches Patentamt
European Patent Office
Office européen des brevets

(11) **EP 2 818 379 B1**

## (12) EUROPEAN PATENT SPECIFICATION

(45) Date of publication and mention
of the grant of the patent:
**18.12.2019 Bulletin 2019/51**

(21) Application number: **13752205.8**

(22) Date of filing: **06.01.2013**

(51) Int Cl.:
***B60W 40/12*** *(2012.01)*      ***F02D 41/30*** *(2006.01)*
***F02D 31/00*** *(2006.01)*

(86) International application number:
**PCT/CN2013/070100**

(87) International publication number:
**WO 2013/123832 (29.08.2013 Gazette 2013/35)**

(54) **ENGINE SELF-ADAPTIVE SYSTEM AND FUEL SAVING METHOD BASED ON VEHICLE OPERATING CONDITION**

SELBSTANPASSENDES MOTORSYSTEM UND KRAFTSTOFFEINSPARVERFAHREN AUF BASIS EINER FAHRZEUGBETRIEBSBEDINGUNG

SYSTÈME DE MOTEUR AUTO-ADAPTATIF ET PROCÉDÉ PERMETTANT D'ÉCONOMISER DU CARBURANT SUR LA BASE DE CONDITION DE FONCTIONNEMENT DE VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.02.2012 CN 201210040669**

(43) Date of publication of application:
**31.12.2014 Bulletin 2015/01**

(73) Proprietor: **Xiamen King Long Motor Vehicle Inspection Co., Ltd**
**Jimei, Xiamen, Fujian 361023 (CN)**

(72) Inventors:
• **CHEN, Xiaobing**
  **Fujian 361023 (CN)**
• **XU, Yifan**
  **Fujian 361023 (CN)**
• **ZHOU, Fangming**
  **Fujian 361023 (CN)**
• **YE, Weihong**
  **Fujian 361023 (CN)**
• **LI, Wei**
  **Fujian 361023 (CN)**
• **CHEN, Guoqiang**
  **Fujian 361023 (CN)**
• **HUANG, Lei**
  **Fujian 361023 (CN)**

(74) Representative: **Schwerbrock, Florian**
**Hagenauer Strasse 1**
**10435 Berlin (DE)**

(56) References cited:
EP-A1- 2 182 323      EP-A2- 0 234 715
WO-A1-2007/139491     CN-A- 1 823 219
CN-A- 101 285 431     CN-A- 101 818 698
CN-A- 101 922 545     JP-A- 2000 038 940
US-A- 5 832 400       US-A1- 2010 031 924

**Description**

BACKGROUND OF THE INVENTION

1. Field of the Invention

The invention relates to a vehicle engines and more particularly to an engine self-adaptive system and fuel saving method based on vehicle operating condition.

2. Description of Related Art

Japan Patent Publication No. JP2000038940A entitled "Method of operating vehicle and associated system" discloses a method for determining information associated with a vehicle, comprising determining a saved amount of fuel and a reduced amount of emissions by using a controller; measuring an amount of energy supplied by an energy storage device and communicating information about the amount of energy to the controller; and determining the saved amount of fuel and the reduced amount of emissions based on the amount of energy supplied by the energy storage device and information correlating an amount of energy used by the vehicle to an amount of fuel consumed by the vehicle and an amount of emissions emitted by the vehicle, for reducing tax liability of the vehicle.

The dynamic relationship between torque and rotational speed of an engine is near linear when the throttle changes stably based on dynamic response characteristics of the engine. Change in the throttle can be expressed by a hysteresis curve. Output torque of the engine may instantaneously increase when the throttle changes stepwise. Further, the amount of fuel injected into the engine is required to increase greatly, suddenly. However, the requirement cannot be fulfilled because both the engine speed increases steadily and the turbocharger increases its output steadily, i.e., they cannot keep up with the required increased amount of fuel for injection. Experimental data shows that 100% of the throttle increases in about five seconds, the mixture in the cylinder is too thick. Further, it has the disadvantages of incomplete combustion, increased fuel consumption and poor emissions.

A driver may greatly press the gas pedal when starting the vehicle, accelerating, or shifting gear. Further, the driver may release the gas pedal after reaching the expected speed. However, such operation may result in an incomplete combustion and thus increased fuel consumption. Further, the sudden acceleration may cause overshoot due to increased engine output torque. In response, the driver is required to brake frequently, resulting in an increase of energy waste. Therefore, it is desired that an economical way of driving involves smooth gas pressing and no sudden acceleration or braking.

Accordingly, the present inventors have devised the invention after studying bad driving habits which cause higher fuel consumption.

SUMMARY OF THE INVENTION

It is therefore one object of the invention to provide an engine self-adaptive system for saving fuel consumption with a sufficient power supplied to a vehicle being ensured.

For achieving above object, the invention provides an engine self-adaptive system based on an operating condition of a vehicle, comprising a plurality of vehicle terminals and an information center interconnected wirelessly, wherein: each of the vehicle terminals comprises: a GPS (Global Positioning System) navigation module for obtaining vehicle location information which is sent to the information center; a running vehicle data collection module for collecting data of a running vehicle, the data including vehicle speed, engine speed, engine torque, throttle open degree, and brake pedal depressing degree; a vehicle specifications and engine operating states memory for storing vehicle specifications of the vehicle, and engine operating states of the vehicle corresponding to different power requirements; a calculation module for obtaining vehicle running states by calculating the data of the running vehicle collected by the running vehicle data collection module, the vehicle running states including acceleration, throttle open degree, and gear; and the calculation module further for obtaining resistance characteristic coefficient of a route with the vehicle running thereon by calculating the vehicle specifications of the vehicle specifications and engine operating states memory; a decision-making module for determining power requirements of the vehicle based on a standard road resistance characteristic coefficient provided by an optimum route memory of the information center, road information provided by a road maps memory of the information center, and the vehicle running states obtained by the calculation module; and the decision-making module further for obtaining the engine operating states from the vehicle specifications and engine operating states memory; and a vehicle control module connected to both the decision-making module and an engine of the vehicle so as to obtain the engine operating states and control output of the engine; and the information center comprises: the road maps memory for storing road maps of a plurality of related areas, further the road maps memory for providing road information of a current route based on the vehicle location information accessed from the GPS navigation module; a historical data memory connected to the vehicle terminals for storing the resistance characteristic coefficient of the route obtained by the calculation module of each of the vehicle terminals during a predetermined period of time and comparing data of different ones of the vehicle terminals for analysis; and the optimum route memory connected to the historical data memory so as to obtain resistance characteristic coefficient of the current route which is downloaded to the decision-making module of each of the vehicle terminals based on the vehicle location information.

Preferably, each of the vehicle terminals further comprises a human interface module for allowing a driver to enter vehicle running data including vehicle load and road states, and wherein the decision-making module determines power requirements of the vehicle based on the vehicle running data, information of the route with the vehicle running thereon, the standard road resistance characteristic coefficient, and the vehicle running states.

Preferably, the vehicle specifications include gear ratio, speed reduction ratio, vehicle dimensions, tire radius, transmission efficiency, vehicle inertia conversion coefficient, drag coefficient, and vehicle front area.

Preferably, the road information of the current route includes slope, road grades, road category, and current road states.

It is another object of the invention to provide a fuel saving method based on an operating condition of a vehicle, including two step groups wherein one step group involves collection and record optimization and the other step group involves execution, and wherein the collection and record optimization comprises the steps of: A1: storing vehicle specifications of a vehicle and engine operating states corresponding to different power requirements in each of a plurality of vehicle terminals, and storing road maps of an area in an information center; and A2: causing each of the vehicle terminals to collect vehicle running data and associating with the vehicle specifications of the vehicle and calculating same to obtain vehicle running states of the vehicle and resistance characteristic coefficient of the route with the vehicle running thereon, each of the vehicle terminals obtaining location information of the vehicle, sending both the resistance characteristic coefficient of the route with the vehicle running thereon and the location information of the vehicle to the information center to be stored as historical data, and obtaining a standard road resistance characteristic coefficient corresponding to the route from the historical data; and wherein the execution comprises the steps of: B1: obtaining a standard road resistance characteristic coefficient corresponding to the location information of the vehicle; B2: determining power requirements of the vehicle based on information of a route with the vehicle running thereon, the vehicle running data, and the standard road resistance characteristic coefficient corresponding to the route, and determining a corresponding engine operating state; and B3: controlling output of the engine based on the corresponding engine operating state.

Preferably, step A1 further comprises the step of allowing a driver to enter data of a running vehicle, the data including a vehicle load and road states; wherein step A2 further comprises the step of taking the vehicle load into consideration when calculating vehicle running states; and wherein step B2 further comprises the step of determining power requirements of the vehicle based on the vehicle running data, information of the route with the vehicle running thereon, the standard road resistance characteristic coefficient, and the vehicle running states.

Preferably, the vehicle specifications include gear ratio, speed reduction ratio, vehicle dimensions, tire radius, transmission efficiency, vehicle inertia conversion coefficient, drag coefficient, and vehicle front area.

Preferably, the vehicle running data includes vehicle speed, engine speed, engine torque, throttle open degree, and brake pedal depressing degree; and the vehicle running states include drag, acceleration, throttle open degree, and gear.

Preferably, the road information of the current route includes slope, road grades, road category, and current road states.

By utilizing the engine self-adaptive system and fuel saving method based on vehicle operating condition of the invention, the following characteristics are obtained: The engine operating states are fetched from the vehicle specifications and engine operating states memory based above requirements and are sent to the vehicle control module for execution. The invention employs the vehicle control module 17 to adjust throttle in order to eliminate adverse effect of bad gas pedal pressing habits. Further, the invention employs a standard road resistance characteristic coefficient which is obtained by associating other vehicles and can be highly referred to. Therefore, the invention can correctly control engine output and ensure a sufficient power supplied to the vehicle, resulting in saving fuel. The vehicle control module adjusts an engine response characteristic and reduces the effect of improper throttle operation. A standard road resistance characteristic coefficient is an optimum and has a higher reference value such that the invention, for ensuring power performance for a vehicle, achieves fuel saving by properly controlling engine output.

The above and other objects, features and advantages of the invention will become apparent from the following detailed description taken with the accompanying drawings.

BRIEF DESCRIPTION OF THE DRAWINGS

FIG. 1 is a schematic of an engine self-adaptive system according to the invention;
FIG. 2 is a schematic detailing the vehicle terminal in block diagram; and
FIG. 3 is a schematic detailing the information center in block diagram;

## LIST OF REFERENCE NUMERALS

| | |
|---|---|
| 100 | engine self-adaptive system |
| 1 | vehicle terminal |
| 11 | GPS navigation module |
| 12 | running vehicle data collection module |
| 13 | vehicle specifications and engine operating states memory |
| 14 | wireless communication module |
| 15 | calculation module |
| 16 | decision-making module |
| 17 | vehicle control module |
| 18 | human interface module |
| 2 | information center |
| 21 | wireless communication module |
| 22 | road maps memory |
| 23 | historical data memory |
| 24 | optimum route memory |

## DETAILED DESCRIPTION OF THE INVENTION

The invention will be best understood from the following detailed description taken with the accompanying drawings.

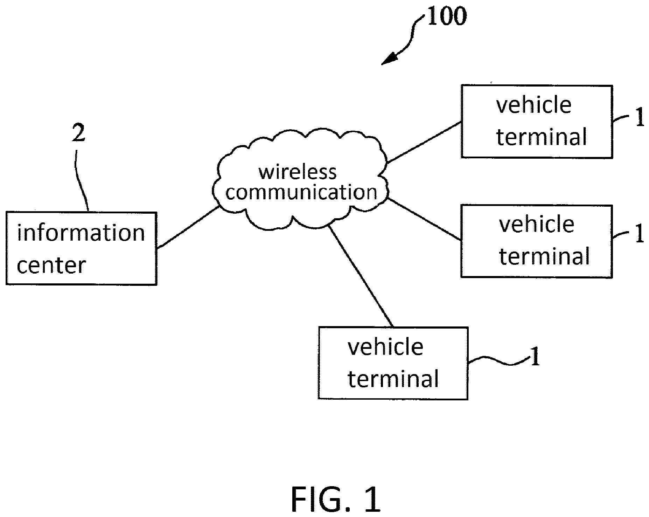

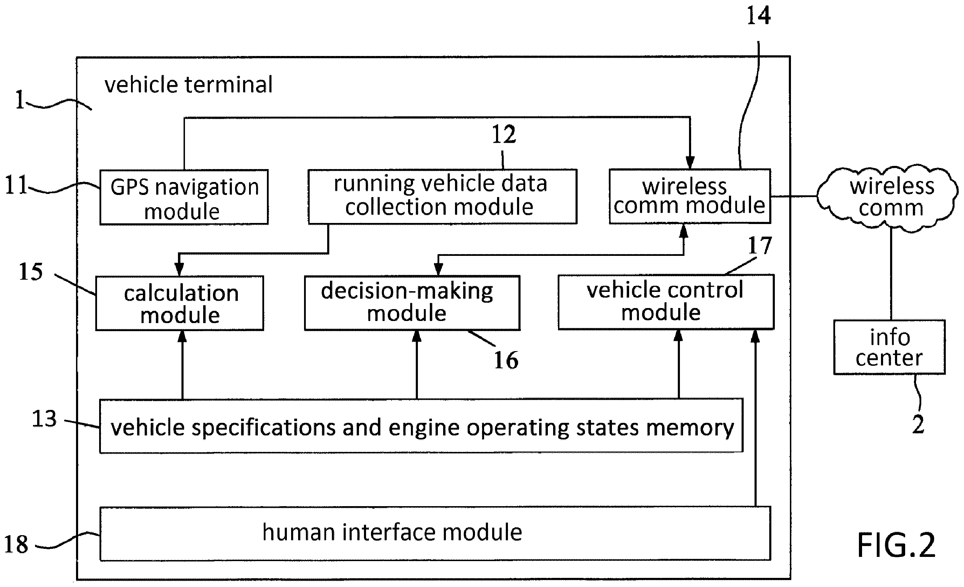

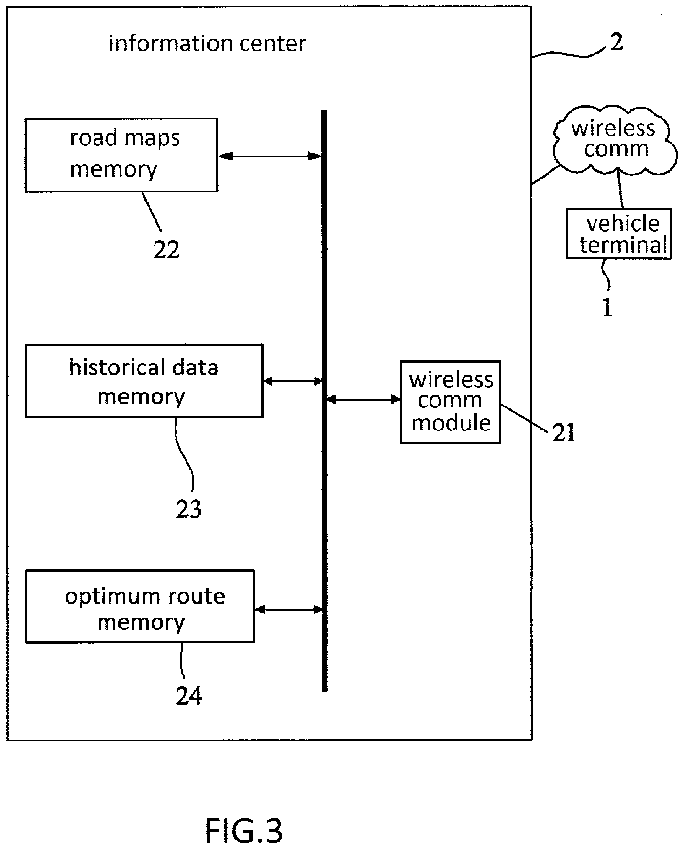

Referring to FIGS. 1 to 3, an engine self-adaptive system in accordance with a preferred embodiment of the invention is generally designated by 100. The system 100 comprises a plurality of vehicle terminals 1, an information center 2, and wireless communication for communicating the vehicle terminals 1 with the information center 2.

The vehicle terminal 1 comprises a GPS (Global Positioning System) navigation module 11, a running vehicle data collection module 12, a vehicle specifications and engine operating states memory 13, a wireless communication module 14, a calculation module 15, a decision-making module 16, and a vehicle control module 17. The information center 2 comprises a wireless communication module 21, a road maps memory 22, a historical data memory 23, and an optimum route memory 24.

The GPS navigation module 11 comprises a GPS antenna and a GPS receiver for obtaining vehicle location information in a manner known in the art. The information is sent to the information center 2 for positioning a vehicle in the road maps memory 22 via the wireless communication module 14 and the wireless communication.

The running vehicle data collection module 12 is used to collect data of a running vehicle. Data collected by the running vehicle data collection module 12 includes vehicle speed, engine speed, engine torque, throttle open degree, and brake pedal depressing degree. For vehicles having electric engine and Internet access capability, data can be collected via CAN (controller area network) mounted thereon. For non-CAN vehicles, additional sensors are required to install for data collection purpose.

The vehicle specifications and engine operating states memory 13 is used to store vehicle specifications and parameters, and operating states of engine. In the preferred embodiment, the vehicle specifications include gear ratio, speed reduction ratio, vehicle dimensions, tire radius, transmission efficiency, vehicle inertia conversion coefficient, drag coefficient, and vehicle front area. The engine operating states are operating states of a running vehicle and are preset. The engine operating states are set based on different torque requirements.

The calculation module 15 obtains the vehicle running states by calculating vehicle running data collected by the running vehicle data collection module 12. The vehicle running states include acceleration, throttle open degree, and gear. The calculation module 15 obtains resistance characteristic coefficient of the route with the vehicle running thereon by calculating the vehicle specifications of the vehicle specifications and engine operating states memory 13.

The decision-making module 16 determines power requirements of the vehicle based on a standard road resistance characteristic coefficient provided by the optimum route memory 24, road information provided by the road maps memory 22, and the vehicle running states obtained by the calculation module 15. The decision-making module 16 further obtains engine operating states from the vehicle specifications and engine operating states memory 13.

The vehicle control module 17 is connected to both the decision-making module 16 and the engine so as to obtain the engine operating states and control output of the engine.

The road maps memory 22 is used to store road maps of related areas. The road maps memory 22 provides road information of the current route based on location information accessed from the GPS navigation module 11. The road information of the current route includes slope, road grades, road category, and current road states. The road category indicates whether the road is an urban road or not.

The historical data memory 23 is connected to the vehicle terminals 1 via the wireless communication module 21 over the wireless communication. The historical data memory 23 is used to store the resistance characteristic coefficient of the route obtained by the calculation module 15 of each vehicle terminal 1 during a predetermined period of time and compare data of different vehicle terminals 1 for analysis. Thus, results obtained by the vehicle terminals 1 can be determined to be correct or not. Further, the incorrect results are eliminated. It is possible of finding road changes not reflected by the maps by comparing data of a route stored in the historical data memory 23 with data of the same route stored in the optimum route memory 24.

The historical data memory 23 and the optimum route memory 24 are interconnected so as to obtain resistance characteristic coefficient of the current route which is in turn downloaded to the decision-making module 16 of each vehicle terminal 1 based on the location information.

A fuel saving method based on vehicle operating condition in accordance with the invention is illustrated in two step groups in which one step group involves collection and record optimization and the other step group involves execution.

The collection and record optimization is used to increase data stored in the historical data memory 23 so that the historical data memory 23 can be used to analyze data for optimization. The collection and record optimization comprises the steps of:

Step A1: vehicle specifications of a vehicle and engine operating states corresponding to different power requirements are stored in each of a plurality of vehicle terminals 1, and road maps of an area are stored in an information center 2; and

Step A2: each of the vehicle terminals 1 collecting vehicle running data and associating with the vehicle specifications of the vehicle and calculating same to obtain vehicle running states of the vehicle and resistance characteristic coefficient of the route with the vehicle running thereon, each of the vehicle terminals 1 obtaining location information of the vehicle, sending both the resistance characteristic coefficient of the route with the vehicle running thereon and the location information of the vehicle to the information center 2 to be stored as historical data, and obtaining a standard road resistance characteristic coefficient corresponding to the route from the historical data.

The execution is used to precisely control operations of the vehicle by means of the resistance characteristic coefficient of the current route obtained by the historical data memory 23 and the optimum route memory 24. That is, driving of the vehicle can be assured to be optimum. The execution comprises the steps of:

Step B1: obtaining a standard road resistance characteristic coefficient corresponding to the location information of the vehicle;

Step B2: determining power requirements of the vehicle based on information of a route with the vehicle running thereon, the vehicle running data, and the standard road resistance characteristic coefficient corresponding to the route, and determining a corresponding engine operating state; and

Step B3: controlling output of the engine based on the corresponding engine operating state.

In such a manner, the engine self-adaptive system 100 and fuel saving method based on vehicle operating condition of the invention stores the resistance characteristic coefficient of the route obtained by each vehicle terminal 1 in the historical data memory 23, and compares data of different vehicle terminals 1 to obtain a standard road resistance characteristic coefficient corresponding to the route. Next, the decision-making module 16 determines power requirements of the vehicle based on the standard road resistance characteristic coefficient, road information, and the vehicle running states. The decision-making module 16 further obtains engine operating states from the vehicle specifications and engine operating states memory 13 based on the power requirements of the vehicle. The engine operating states are finally sent to the vehicle control module for execution.

Preferably, the engine self-adaptive system 100 further comprises a human interface module 18 for allowing a driver to enter vehicle running data including vehicle load and road states. The decision-making module 16 determines power requirements of the vehicle based on the vehicle running data, information of the route with the vehicle running thereon, the standard road resistance characteristic coefficient, and the vehicle running states. Further, the driver may deactivate the engine self-adaptive system 100 or select a desired engine state by operating the human interface module 18.

Implementation of the engine self-adaptive system 100 of the invention is described below.

Driving force and drag are inherent to a running vehicle. Balance of different drags can be expressed in the following equation:

$$F_t = F_f + F_w + F_i + F_j$$

Where $F_t$ is driving force, Ff is rolling resistance, $F_w$ is air resistance, $F_i$ is resistance of driving on a slope, and $F_j$ is acceleration resistance.

The equation is equivalent to the following expression:

$$\frac{T_{tq} i_g i_0 \eta_\tau}{r} \approx \delta ma + mg \sin\theta + mgf \cos\theta + \frac{C_D A v^2}{21.15}$$

Where $T_{tq}$ is engine torque, $i_g$ is gear ratio , $i_0$ is transmission ratio of main reduction gear, r is tire radius, $\eta_\tau$ is transmission efficiency, $\delta$ is inertia conversion coefficient of transmission , m is vehicle mass , a is acceleration, g is gravitational acceleration, f is rolling resistance coefficient, $\theta$ is inclined angle of a slope, v is vehicle speed, $C_D$ is wind dragging coefficient, and A is front area of vehicle.

Above equation can be further expressed as:

$$\lambda = (\sin\theta + f\cos\theta) = \frac{\dfrac{T_{tq} i_g i_0 \eta_\tau}{r} - \dfrac{C_D A v^2}{21.15} - \delta ma}{mg}$$

Where $\lambda$ is road resistance characteristic coefficient or equivalent slope.

Where engine torque $T_{tq}$ and vehicle speed v can obtained by referring to CAN website or from a corresponding controller. $i_g$, $i_0$, r, $\eta_\tau$, $\delta$, $C_D$, and a can be stored in the vehicle specifications and engine operating states memory 13 of the vehicle terminal 1. Further, obtained vehicle speed is subjected to a smooth operation. Acceleration a can be obtained by calculating vehicle speed changes and is expressed as follows:

$$a = \frac{(v_{10} + v_9 + v_8 + v_7 + v_6) - (v_5 + v_4 + v_3 + v_2 + v_1)}{5T}$$

Where T is time interval of two consecutive vehicle speed samples, $v_1$ to $v_{10}$ are vehicle speeds of recent 10 speed samples, and $v_{10}$ is the latest vehicle speed.

Engine torque may vary greatly in response to a sudden change of throttle. However, the vehicle cannot accommodate such great change of the engine torque due to great inertia of the vehicle. As a result, $\lambda$ obtained by calculation may deviate greatly. Thus, relevant data should be deleted in the operation. That is, data related to stable throttle or throttle having small changes is used to calculate. Data collected by the running vehicle data collection module 12 including throttle open degree and brake pedal depressing degree is excluded from being used in the abnormal torque. The remaining engine torque is subjected to a smooth operation. Likewise, gear is subjected to above processing. In detail, if the current gear is abnormal or inappropriate under the current vehicle speed, value of the resistance characteristic coefficient $\lambda$ obtained by calculation is discarded. It is noted that the calculated vehicle torque is not correct when the gear is abnormal or inappropriate. For vehicle mass m, it includes weight of the vehicle and load on the vehicle. The load can be added to the vehicle mass m by a driver by entering data by operating the human interface module 18.

For the whole decision-making process, the resistance characteristic coefficient $\lambda$ is obtained by calculating data in the optimum route memory 24. The resistance characteristic coefficient $\lambda$ means characteristics of a route including slope and road states (i.e., resistance of a road). Power requirements of a vehicle running on a road can be obtained from the following equation:

$$F_t = \left( mg\lambda + \frac{C_D A v^2}{21.15} \right) \bullet \alpha \bullet \beta$$

Where v is selected as a smaller one of speed limit and cruising speed. Value v is changed in response to slow traffic. Road condition can be described by slow traffic or smoothness qualitatively. Alternatively, road condition can be as "average speed is 20km/h in a specified road section" quantitatively. At this time, value v represents the real speed of a vehicle with an indication of whether the traffic being slow or smooth.

$\alpha$ is power storage coefficient and is a constant associated with vehicle type. It indicates whether there is sufficient power for driving a vehicle. $\alpha$ is selected by taking vehicle power specifications and driver's opinions into consideration in order to ensure that acceleration is in an acceptable range. β is route correction coefficient which is closely related to route conditions entered through the human interface module. The route conditions include fast lane and promised time to reach destination. Increased value of β can increase power of a vehicle.

$F_t$ of a vehicle is obtained from above calculation. Optimum gear ratio io can be determined based on vehicle speeds v at different gears as demonstrated by the following two expressions:

$$F_t = F_f + F_w + F_i + F_j$$

$$\frac{T_{tq}i_g i_0 \eta_\tau}{r} \approx \delta ma + mg\sin\theta + mgf\cos\theta + \frac{C_D A v^2}{21.15}$$

Further, it is expressed that $F_t = \dfrac{T_{tq}i_g i_0 \eta_\tau}{r}$ where $T_{tq}$ is the maximum engine torque. Maximum engine power P can be obtained from the expression P=$F_t$*v. The selected engine power is the larger one of the maximum engine torque and the maximum engine power.

Finally, the engine operating states are fetched from the vehicle specifications and engine operating states memory 13 based above requirements and are sent to the vehicle control module 17 for execution. It is concluded that the invention employs the vehicle control module 17 to adjust throttle in order to eliminate adverse effect of bad gas pedal pressing habits. Further, the invention employs a standard road resistance characteristic coefficient which is obtained by associating other vehicles and can be highly referred to. Therefore, the invention can correctly control engine output and ensure a sufficient power supplied to the vehicle, resulting in saving fuel.

Although the invention has been described in detail, it is to be understood that this is done by way of illustration only and is not to be taken by way of limitation. The scope of the invention is to be limited only by the appended claims.

**Claims**

1. An engine self-adaptive system (100) based on an operating condition of a vehicle, comprising a plurality of vehicle terminals (1) and an information center (2) interconnected wirelessly, wherein: each of the vehicle terminals (1) comprises:

   a GPS (Global Positioning System) navigation module (11) for obtaining vehicle location information which is sent to the information center (2);
   a running vehicle data collection module (12) for collecting data of a running vehicle, the data including vehicle speed, engine speed, engine torque, throttle open degree, and brake pedal depressing degree **characterized by**:

   a vehicle specifications and engine operating states memory (13) for storing vehicle specifications of the vehicle, and engine operating states of the vehicle corresponding to different power requirements;
   a calculation module (15) for obtaining vehicle running states by calculating the data of the running vehicle collected by the running vehicle data collection module (12), the vehicle running states including acceleration, throttle open degree, and gear; and the calculation module (15) further for obtaining resistance characteristic coefficient of a route with the vehicle running thereon by calculating the vehicle specifications and the engine operating states memory (13), wherien the vehicle specifications include gear ratio, speed reduction ratio, vehicle dimensions, tire radius, transmission efficiency, vehicle inertia conversion coefficient, drag coefficient, and vehicle front area;
   a decision-making module (16) for determining power requirements of the vehicle based on a standard road resistance characteristic coefficient provided by an optimum route memory (24) of the information center (2), road information provided by a road maps memory (22) of the information center (2), and the vehicle running states obtained by the calculation module (15); and the decision-making module (16) further for obtaining the engine operating states from the vehicle specifications and engine operating states memory (13);

a vehicle control module (17) connected to both the decision-making module (16) and an engine of the vehicle so as to obtain the engine operating states and control output of the engine; and

a human interface module (18) for allowing a driver to enter vehicle running data including vehicle load and road states; and

the information center (2) comprises:

the road maps memory (22) for storing road maps of a plurality of related areas, further the road maps memory (22) for providing road information of a current route based on the vehicle location information accessed from the GPS navigation module (11);

a historical data memory (23) connected to the vehicle terminals (1) for storing the resistance characteristic coefficient of the route obtained by the calculation module (15) of each of the vehicle terminals (1) during a predetermined period of time and comparing data of different ones of the vehicle terminals (1) for analysis for obtaining the standard road resistance characteristic coefficient corresponding to the route; and

the optimum route memory (24) connected to the historical data memory (23) so as to obtain resistance characteristic coefficient of the current route, and then the resistance characteristic coefficient of the current route is downloaded to the decision-making module (16) of each of the vehicle terminals (1) based on the vehicle location information.

2. A fuel saving method based on an operating condition of a vehicle, including two step groups **characterized in that** wherein one step group involves collection and record optimization and the other step group involves execution, and wherein the collection and record optimization comprises the steps of:

A1: storing vehicle specifications of a vehicle and engine operating states corresponding to different power requirements in each of a plurality of vehicle terminals (1), and storing road maps of an area in an information center (2); and

A2: causing each of the vehicle terminals (1) to collect vehicle running data and associating with the vehicle specifications of the vehicle and calculating same to obtain vehicle running states of the vehicle and resistance characteristic coefficient of the route with the vehicle running thereon, each of the vehicle terminals (1) obtaining location information of the vehicle, sending both the resistance characteristic coefficient of the route with the vehicle running thereon and the location information of the vehicle to the information center (2) to be stored as historical data, and obtaining a standard road resistance characteristic coefficient corresponding to the route from the historical data; and

wherein the execution comprises the steps of:

B1: obtaining a standard road resistance characteristic coefficient corresponding to the location information of the vehicle;

B2: determining power requirements of the vehicle based on information of a route with the vehicle running thereon, the vehicle running data, and the standard road resistance characteristic coefficient corresponding to the route, and determining a corresponding engine operating state; and

B3: controlling output of the engine based on the corresponding engine operating state.

3. The fuel saving method of claim 2, wherein step A1 further comprises the step of allowing a driver to enter data of a running vehicle, the data including a vehicle load and road states; wherein step A2 further comprises the step of taking the vehicle load into consideration when calculating vehicle running states; and wherein step B2 further comprises the step of determining power requirements of the vehicle based on the vehicle running data, information of the route with the vehicle running thereon, the standard road resistance characteristic coefficient, and the vehicle running states.

4. The fuel saving method of claim 2, wherein the vehicle specifications include gear ratio, speed reduction ratio, vehicle dimensions, tire radius, transmission efficiency, vehicle inertia conversion coefficient, drag coefficient, and vehicle front area.

5. The fuel saving method of claim 2, wherein the vehicle running data includes vehicle speed, engine speed, engine torque, throttle open degree, and brake pedal depressing degree; and the vehicle running states include drag, acceleration, throttle open degree, and gear.

6. The fuel saving method of claim 2, wherein the road information of the current route includes slope, road grades, road category, and current road states.

**Patentansprüche**

1. Ein selbstadaptives Motorsystem (100) gemäß einem Betriebszustand eines Fahrzeugs, umfassend mehrere Fahrzeugterminals (1) und ein Informationszentrum (2), die drahtlos miteinander verbunden sind, wobei:

jedes Fahrzeugterminal (1) Folgendes umfasst:

ein GPS (Global Positioning System) -Navigationsmodul (11) zum Erhalten von Fahrzeugstandortinformationen, die an das Informationszentrum (2) gesendet werden;
ein Datenerfassungsmodul für fahrende Fahrzeuge (12) zum Sammeln von Daten eines fahrenden Fahrzeugs, wobei die Daten Fahrzeuggeschwindigkeit, Motordrehzahl, Motordrehmoment, Drosselöffnungsgrad und Bremspedalniederdrückungsgrad umfassen;

**gekennzeichnet durch**:

ein Speicher für Fahrzeugparameter und Motorbetriebszustandsdaten (13) zum Speichern von Fahrzeugparametern und Motorbetriebszustandsdaten des Fahrzeugs entsprechend unterschiedlichen Leistungsanforderungen;
ein Berechnungsmodul (15) zum Erhalten von Fahrzeugfahrzustandsdaten durch Berechnung der Daten des fahrenden Fahrzeugs, die durch das Datenerfassungsmodul für fahrende Fahrzeuge (12) gesammelt wurden, wobei die Fahrzeugfahrzustandsdaten Beschleunigung, Drosselöffnungsgrad und Gang umfassen; wobei das Berechnungsmodul (15) ferner zum Erhalten des Routen-Widerstandsbeiwerts eines darauf fahrenden Fahrzeugs durch Berechnung des Speichers für Fahrzeugparameter und Motorbetriebszustandsdaten dient, wobei die Fahrzeugparameter Übersetzungsverhältnis, Untersetzungsverhältnis, Fahrzeugabmessung, Reifenradius, Übertragungseffizienz, Fahrzeugträgheitsumrechnungskoeffizient, Luftwiderstandskoeffizient und Fahrzeugfrontfläche umfassen;
ein Entscheidungsmodul (16) zum Bestimmen der Fahrzeugleistungsanforderungen basierend auf einem durch einen Optimalroutenspeicher (24) des Informationszentrums (2) bereitgestellten Standardstraßen-Widerstandsbeiwert, auf den durch einen Straßenkarten-Speicher (22) des Informationszentrums (2) bereitgestellten Straßeninformationen und den vom Berechnungsmodul (15) erhaltenen Fahrzeugfahrzustandsdaten, wobei das Entscheidungsmodul (16) ferner zum Erhalten der Motorbetriebszustände vom Speicher für Fahrzeugparameter und Motorbetriebszustandsdaten (13) dient;
ein Fahrzeugsteuermodul (17), das sowohl mit dem Entscheidungsmodul (16) als auch mit dem Motor des Fahrzeugs verbunden ist, um die Motorbetriebszustände und die Steuerleistung des Motors zu erhalten; und
ein Human-Interface-Modul (18), das dem Fahrer erlaubt, Fahrzeugfahrdaten einschließlich der Fahrzeugbelastung und der Straßenzustände einzugeben; und

ein Informationszentrum (2), das Folgendes umfasst:

einen Straßenkarten-Speicher (22) zum Speichern von Straßenkarten mehrerer zusammenhängender Gebiete, wobei ferner der Straßenkarten-Speicher (22) zum Bereitstellen von Straßeninformationen einer aktuellen Route basierend auf den durch das GPS-Navigationsmodul (11) abgerufenen Fahrzeugstandortinformationen dient;
einen Historiendatenspeicher (23), der mit den Fahrzeugterminals (1) verbunden ist, um einen durch das Berechnungsmodul (15) jedes der Fahrzeugterminals (1) erhaltenen Routen-Widerstandsbeiwert während einer vorgegebenen Zeitdauer zu speichern und um zur Auswertung Daten der verschiedenen Fahrzeugterminals (1) zu vergleichen, um den der Route entsprechenden Standardstraßen-Widerstandsbeiwert zu erhalten; und
einen Optimalroutenspeicher (24), der mit dem Historiendatenspeicher (23) verbunden ist, um den Widerstandsbeiwert der aktuellen Route zu erhalten, dadnach wird der Widerstandsbeiwert der aktuellen Route basierend auf den Fahrzeugstandortinformationen auf das Entscheidungsmodul (16) jedes der Fahrzeugterminals (1) heruntergeladen.

**2.** Eine Kraftstoffeinsparungsmethode auf der Grundlage des Betriebszustands eines Fahrzeugs, umfassend zwei Schrittgruppen, **dadurch gekennzeichnet, dass** eine Schrittgruppe Sammlung und Protokolloptimierung und die andere Schrittgruppe Ausführung umfasst, wobei die Sammlung und die Protokolloptimierung die folgenden Schritte umfasst:

A1: Speichern von Fahrzeugparametern eines Fahrzeugs und von Motorbetriebszuständen, die unterschiedlichen Leistungsanforderungen jedes einer Mehrzahl von Fahrzeugterminals (1) entsprechen, und Speichern von Straßenkarten eines Gebiets in einem Informationszentrum (2); und

A2: Veranlassen, dass jedes der Fahrzeugterminals (1) Fahrzeugfahrdaten sammelt und mit den Fahrzeugparametern verbindet und diese berechnet, um die Fahrzeugfahrzustandsdaten und den Routen-Widerstandsbeiwert des darauf fahrenden Fahrzeugs zu erhalten, wobei jedes der Fahrzeugterminals (1) Fahrzeugstandortinformationen erhält und sowohl den Routen-Widerstandsbeiwert des darauf fahrenden Fahrzeugs als auch die Fahrzeugstandortinformationen an das Informationszentrum (2) sendet, damit diese als Historiendaten gespeichert werden, und Erhalten eines der Route entsprechenden Standardstraßen-Widerstandsbeiwerts aus den Historiendaten;

wobei die Ausführung die folgenden Schritte umfasst:

B1: Erhalten eines den Fahrzeugstandortinformationen entsprechenden Standardstraßen-Widerstandsbeiwerts;

B2: Bestimmen der Fahrzeugleistungsanforderungen anhand der Routeninformationen des darauf fahrenden Fahrzeugs, der Fahrzeugfahrdaten und des der Route entsprechenden Standardstraßen-Widerstandsbeiwerts, und Bestimmen der entsprechenden Motorbetriebszustandsdaten; und

B3: Steuern der Leistung des Motors basierend auf den Motorbetriebszustandsdaten.

**3.** Kraftstoffeinsparungsmethode nach Anspruch 2, wobei der Schritt A1 ferner den Schritt umfasst, der dem Fahrer erlaubt, die Daten eines fahrenden Fahrzeugs, die Daten, die eine Fahrzeugbelastung und Straßenzustände umfassen, einzugeben; wobei der Schritt A2 ferner den Schritt des Berücksichtigens der Fahrzeugbelastung beim Berechnen der Fahrzeugfahrzustandsdaten umfasst, wobei der Schritt B2 ferner den Schritt des Bestimmens des Fahrzeugleistungsbedarfs basierend auf den Fahrzeugfahrdaten, Routeninformationen des darauf fahrenden Fahrzeugs, dem Standardstraßen-Widerstandsbeiwert und den Fahrzeugfahrzustandsdaten umfasst.

**4.** Kraftstoffeinsparungsmethode nach Anspruch 2, wobei die Fahrzeugparameter Übersetzungsverhältnis, Untersetzungsverhältnis, Fahrzeugabmessung, Reifenradius, Übertragungseffizienz, Fahrzeugträgheitsumrechnungskoeffizient, Luftwiderstandskoeffizient und Fahrzeugfrontfläche umfassen.

**5.** Kraftstoffeinsparungsmethode nach Anspruch 2, wobei die Fahrzeugfahrdaten Fahrzeuggeschwindigkeit, Motordrehzahl, Motordrehmoment, Drosselöffnungsgrad und Bremspedalniederdrückungsgrad umfassen; wobei die Fahrzeugfahrzustandsdaten Luftwiderstand, Beschleunigung, Drosselöffnungsgrad und Gang umfassen.

**6.** Kraftstoffeinsparungsmethode nach Anspruch 2, wobei die Straßeninformationen der aktuellen Route Steigung, Straßenqualitäten, Straßenkategorie und aktuelle Straßenzustände umfassen.

**Revendications**

**1.** Un système de moteur auto-adaptatif (100) basé sur une condition de fonctionnement d'un véhicule, comprenant une pluralité de terminaux montés sur le véhicule (1) et un centre d'informations (2) interconnecté sans fil, **caractérisé par le fait que** :

chaque terminal monté sur le véhicule (1) est **caractérisé par le fait qu'**il comprend :

un module navigation GPS (Système de positionnement global) (11) pour obtenir les informations de localisation du véhicule qui sont envoyées au centre d'informations (2) ;

un module d'acquisition de données de fonctionnement du véhicule (12) pour acquérir les données de fonctionnement d'un véhicule, les données comprenant la vitesse du véhicule, la vitesse du moteur, le couple moteur, le degré d'ouverture de l'accélérateur et le degré d'abaissement de la pédale de frein ; **caractérisé par** :

une mémoire des spécifications du véhicule et des états de fonctionnement du moteur (13) pour stocker les spécifications du véhicule, et les états de fonctionnement du moteur du véhicule correspondant à différentes exigences de puissance ;

un module de calcul (15) pour obtenir l'état de marche du véhicule en calculant les données de fonctionnement du véhicule acquises par le module d'acquisition de données de fonctionnement du véhicule (12), l'état de marche du véhicule comprenant l'accélération, le degré d'ouverture de l'accélérateur, et la vitesse ; et le module de calcul (15) permet en outre d'obtenir le coefficient caractéristique de résistance d'un itinéraire avec le véhicule roulant sur celui-ci en calculant la mémoire des spécifications du véhicule et des états de fonctionnement du moteur (13), les spécifications du véhicule comprennent le rapport de transmission, le rapport de réduction de vitesse, les dimensions du véhicule, le rayon de pneu, l'efficacité de la transmission, le coefficient de conversion de l'inertie du véhicule, le coefficient aérodynamique, et la zone avant du véhicule ;

un module de prise de décision (16) pour déterminer les exigences de puissance du véhicule sur la base d'un coefficient caractéristique de résistance de route standard fourni par une mémoire d'itinéraire optimum (24) du centre d'informations (2), des informations routières fournies par une mémoire de cartes routières (22) du centre d'informations (2), et l'état de marche du véhicule obtenu par le module de calcul (15) ; et le module de prise de décision (16) permet en outre d'obtenir les états de fonctionnement du moteur à partir de la mémoire des spécifications du véhicule et des états de fonctionnement du moteur (13) ;

un module de commande de véhicule (17) connecté à la fois au module de prise de décision (16) et à un moteur du véhicule afin d'obtenir les états de fonctionnement du moteur et commander la sortie du moteur ; et

un module d'interface humaine (18) pour permettre à un conducteur d'entrer les données de fonctionnement du véhicule comprenant le chargement du véhicule et l'état de la route ; et

le centre d'informations (2) **caractérisé par le fait qu'**il comprend :

la mémoire de cartes routières (22) pour stocker des cartes routières d'une pluralité de zones connexes, la mémoire de cartes routières (22) permet en outre de fournir des informations routières d'un itinéraire actuel fondées sur les informations de localisation du véhicule accessibles depuis le module de navigation GPS (11) ;

une mémoire de données d'historique (23) connectée aux terminaux montés sur le véhicule véhicule (1) pour stocker le coefficient caractéristique de résistance de la route obtenu par le module de calcul (15) de chaque terminal monté sur le véhicule (1) pendant une période de temps prédéterminée et en comparant les données des différents terminaux montés sur le véhicule (1) pour analyse pour obtenir le coefficient caractéristique de résistance de route standard correspondant à l'itinéraire ; et

la mémoire d'itinéraire optimum (24) connectée à la mémoire de données d'historique (23) afin d'obtenir le coefficient caractéristique de résistance de l'itinéraire actuel, et le coefficient caractéristique de résistance de l'itinéraire actuel est ensuite téléchargé vers le module de prise de décision (16) de chaque terminal monté sur le véhicule (1) basé sur les informations de localisation du véhicule.

2. Procédé permettant d'économiser du carburant basé sur une condition de fonctionnement d'un véhicule, comprenant deux groupes à étapes **caractérisé en ce qu'**un groupe à étapes concerne l'optimisation de l'acquisition et de l'enregistrement et l'autre groupe à étapes implique l'exécution, et l'optimisation de l'acquisition et de l'enregistrement comprend les étapes de :

A1 : stocker des spécifications de véhicule d'un véhicule et des états de fonctionnement du moteur correspondant à différentes exigences de puissance dans chacun d'une pluralité de terminaux montés sur le véhicule (1), et stocker des cartes routières d'une zone dans un centre d'informations (2) ; et

A2 : amener chaque terminal monté sur le véhicule (1) à acquérir les données de fonctionnement du véhicule et à les associer avec les spécifications du véhicule et calculer l'équivalent pour obtenir l'état de marche du véhicule et le coefficient caractéristique de résistance de l'itinéraire avec le véhicule roulant sur celui-ci, chaque terminal monté sur le véhicule (1) obtenant les informations de localisation du véhicule, envoyant à la fois le coefficient caractéristique de résistance de l'itinéraire avec le véhicule roulant sur celui-ci et les informations de localisation du véhicule au centre d'informations (2) pour être stockés comme données d'historique, et obtenir un coefficient caractéristique de résistance de route standard correspondant à l'itinéraire à partir des données d'historique ; et

l'exécution **caractérisé par le fait qu'**elle comprend les étapes de :

B1 : obtenir un coefficient caractéristique de résistance de route standard correspondant aux informations de localisation du véhicule ;

B2 : déterminer les exigences de puissance du véhicule sur la base d'informations d'un itinéraire avec le véhicule roulant sur celui-ci, les données de fonctionnement du véhicule, et le coefficient caractéristique de résistance de route standard correspondant à l'itinéraire, et déterminer un état de fonctionnement du moteur correspondant ; et

B3 : commander la sortie du moteur en fonction de l'état de fonctionnement du moteur correspondant.

3. Procédé permettant d'économiser du carburant de la revendication 2, **caractérisé par le fait que** l'étape A1 comprend en outre l'étape de permettre à un conducteur d'entrer les données de fonctionnement d'un véhicule, les données comprenant le chargement du véhicule et l'état de la route ; l'étape A2 comprend en outre l'étape de prendre en compte le chargement du véhicule lors du calcul de l'état de marche du véhicule ; et l'étape B2 comprend en outre l'étape de déterminer les exigences de puissance du véhicule sur la base les données de fonctionnement du véhicule, les informations de l'itinéraire avec le véhicule roulant sur celui-ci, le coefficient caractéristique de résistance de route standard, et l'état de marche du véhicule.

4. Procédé permettant d'économiser du carburant de la revendication 2, **caractérisé par le fait que** les spécifications du véhicule comprennent le rapport de transmission, le rapport de réduction de vitesse, les dimensions du véhicule, le rayon de pneu, l'efficacité de la transmission, le coefficient de conversion de l'inertie du véhicule, le coefficient aérodynamique, et la zone avant du véhicule.

5. Procédé permettant d'économiser du carburant de la revendication 2, **caractérisé par le fait que** les données de fonctionnement du véhicule comprennent la vitesse du véhicule, la vitesse du moteur, le couple moteur, le degré d'ouverture de l'accélérateur et le degré d'abaissement de la pédale de frein ; et l'état de marche du véhicule comprend le coefficient aérodynamique, l'accélération, le degré d'ouverture de l'accélérateur, et la vitesse.

6. Procédé permettant d'économiser du carburant de la revendication 2, **caractérisé par le fait que** les informations routières de l'itinéraire actuel comprennent les pentes, les nivelés, la catégorie et l'état actuel de la route.

FIG. 1

**FIG.2**

vehicle terminal — 1

11 — GPS navigation module

12 — running vehicle data collection module

14 — wireless comm module

15 — calculation module

16 — decision-making module

17 — vehicle control module

13 — vehicle specifications and engine operating states memory

18 — human interface module

wireless comm

info center — 2

EP 2 818 379 B1

FIG.3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000038940 A